# EUROPEAN PATENT SPECIFICATION

(11) **EP 1 266 094 B1**
(45) Date of publication and mention of the grant of the patent: **25.04.2007**
(21) Application number: 00960368.9
(22) Date of filing: 15.09.2000
(51) Int. Cl.: E01C 23/09, E01C 23/18

(54) **A JET-BLASTER DEVICE**
DRUCKSTRAHLVORRICHTUNG
DISPOSITIF DE PROJECTION A JETS

(30) Priority: 23.03.2000 US 533698
(43) Date of publication of application: 18.12.2002
(73) Proprietor: Zacho, Karin, 8660 Skanderborg (DK)
(72) Inventor: Zacho, Bo Ravnsbaek, 8660 Skanderborg (DK)
(74) Representative: Gregersen, Niels Henrik
(86) International application number: PCT/DK2000/000512
(87) International publication number: WO 2001/071096

(56) References cited:
- WO-A1-94/26982
- WO-A1-99/20853
- DE-C1- 3 612 685
- FR-A1- 2 735 798
- US-A- 2 898 825

## Description

### FIELD OF THE INVENTION

The present invention relates to a jet-blaster device especially for use in the application of preformed road markings and pavement maintenance work such as crack filling and other industrial applications such as epoxy injections for concrete slabs. Such devices are disclosed in, for example, WO 94/26982 A.

### BACKGROUND OF THE INVENTION

In order to provide different traffic markings on the surfaces of road pavements in an easier manner it is known to make use of prefabricated stripes and other signs made from thermoplastic or epoxy which for instance is marketed by the company Linear Dynamics Inc. under the trademark ThermaLine^{™}.

ThermaLine^{™} is a heat fused preformed thermoplastic pavement marking item specially designed for easy, year round application with the durability of hot applied thermoplastic and the excellent appearance of preformed plastic.

Furthermore ThermaLine^{™} comes with a unique glassing system which will ensure the desired nighttime retroreflective and needed skid resistance for today's driving public. It is easy to apply and can be installed during all four seasons of the year.

The present invention has for its purpose to provide an improved mobile jet-blaster device which especially is well qualified for the application of preformed road markings and pavement maintenance works such as crack filling and other industrial applications such as epoxy injection for concrete slabs.

### SUMMARY OF THE INVENTION

According to the invention there is provided a jet-blaster device especially for use in the application of preformed road markings and pavement maintenance works such as crack filling and other industrial applications such as epoxy injections for concrete slabs, said jet-blaster device comprising a wheel supported frame system provided with a supply gas bottle, a combustion engine being drivingly connected with a fan, an outlet opening of which being connected by means of a flexible hose to a jet-blaster gun comprising a gas heated burner system having an outlet nozzle, said wheel supported frame system preferably being provided as a pushcart with a cart-pole at one end and the jet-blaster gun at the opposite end, wherein said jet-blaster gun is adapted to be mounted inclined and adjustable in such a manner that the outlet nozzle of the jet-blaster gun may be directed against surface paths at both sides and at the front end of the wheel supported frame system.

Hereby is obtained an improved mobile jet-blaster device which especially is well qualified for the application of preformed road markings and pavement maintenance works such as crack filling and other industrial applications such as epoxy injections for concrete slabs. The jet-blaster device furthermore appears as a compact mobile unit which is very easy to operate and requires very little free space.

According to a still further aspect of the invention the jet-blaster may be such provided that the outlet from the jet-blaster gun is provided with a transverse directed mouthpiece which by way of example has a width of same magnitude as that of the pushcart.

According to a still further aspect of the invention the mouthpiece may furthermore be adapted to be rotated in relation to the outlet nozzle of the jet-blaster gun so that the active working path of the jet-blaster device may easily be adjusted in accordance with the width of the preformed marking item in question.

According to a still further aspect of the invention the jet-blaster device may be provided as a self-propelled unit comprising an electric drive motor being supplied with electric power from a generator which either is driven by the combustion engine or is a part of this.

According to a still further aspect of the invention the jet-blaster device may be provided as a self-propelled unit by which said combustion engine is drivingly connected to the driving wheels and to a number of fans for a corresponding numbers of jet-blaster guns, the outlet nozzles of which ending in a common oblong heating box positioned close to the pavement surface.

### BRIEF DESCRIPTION OF DRAWING

The invention is described in more details with reference to the drawing, in which:
- Fig. 1: shows a side view of an embodiment of a jet-blaster device according to the invention,
- Fig. 2: shows a side view of the jet-blaster device shown in Fig. 1 - as seen from the opposite side,
- Fig. 3: shows the jet-blaster device shown in Figs. 1 and 2 during crack filling maintenance work of a floor construction,
- Fig. 4: shows another embodiment of a jet-blaster device according to the invention provided with a transverse mouthpiece during drying work of an asphalt pavement surface,
- Fig. 5: shows the jet-blaster device shown in Fig. 4 during heat application of a pre-formed marking stripe on an asphalt pavement surface,
- Fig. 6: shows a further embodiment of a larger self-propelling jet-blaster device according to the invention shown,
- Fig. 7: shows the jet-blaster device shown in Fig. 6 as seen from behind, and
- Fig. 8: shows a cross sectional view of a preferred embodiment of a gas heated burner system of the jet-blaster device according to the invention.

### DETAILED DESCRIPTION OF THE PREFERRED EMBODIMENTS

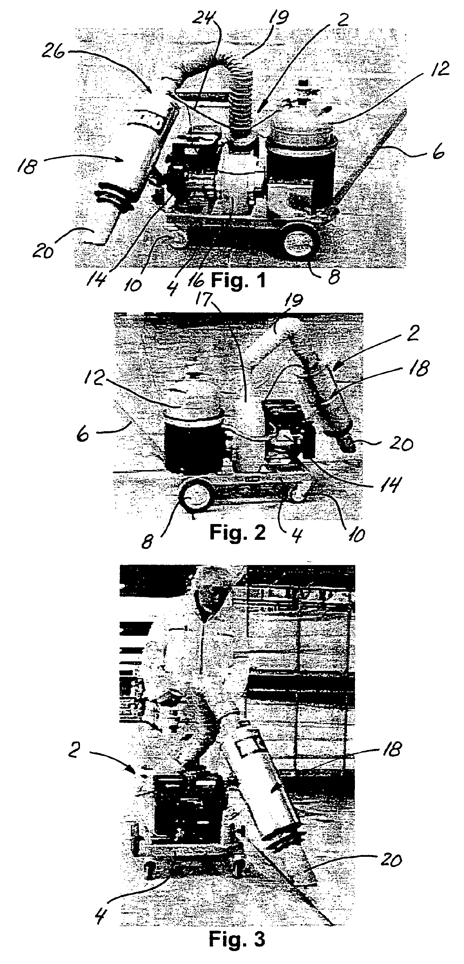

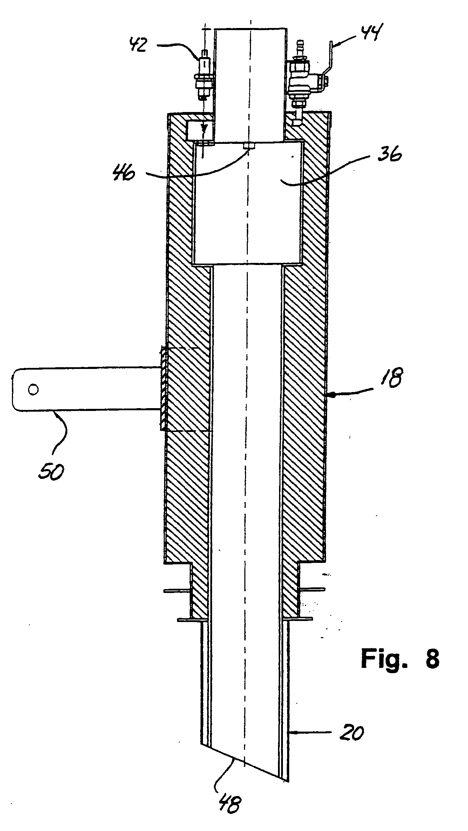

The jet-blaster device 2 shown in Figs. 1 - 3 is constructed on a pushcart 4 with a cart pole 6 and stationary wheels 8 at one end and pivotal wheels 10 at the opposite end. On top of the stationary wheels 8 the pushcart 4 has a compartment for a supply gas bottle 12. At the opposite end of the pushcart 4 is mounted a combustion engine 14 which is drivingly connected to a fan 16, the exhaust opening 17 of which is connected by means of a flexible hose 19 to the top end of a jet-blaster gun 18, the outlet nozzle 20 of which is positioned close to a pavement surface 22. Gas from the gas bottle 12 is supplied through a hose 24 to a burner system 26 at the top end of the jet-blaster gun 18 (Fig. 8).

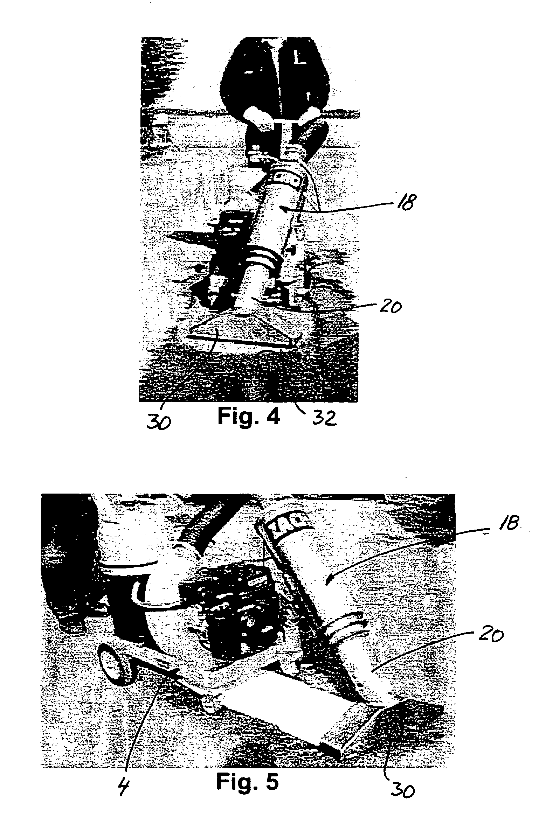

The jet-blaster gun 18 is mounted inclined in relation to the front end of the pushcart 4 on a pivot socket 28 so that the outlet nozzle 20 of the jet-blaster gun 18 may easily be adjusted to take in any position at both sides of the pushcart 4 and at the front end thereof in order to make it possible to direct the outlet nozzle 20 of the jet-blaster gun 18 towards any possible pavement surface path during forward or rearward movement of the pushcart 4 - as for instance shown in Fig. 3, where the jet-blaster device 2 is used in connection with crack filling.

By the jet-blaster device 2 shown in Fig. 4 the outlet nozzle 20 of the jet-blaster gun 18 is provided with a transverse mouthpiece 30 with a width of the same magnitude as that of the width of the pushcart 4. The mouthpiece 30 is furthermore pivotally connected to the outlet nozzle 20 of the jet-blaster gun 18 so that the active width of the mouthpiece 30 may be adjusted by turning it in relation to the outlet nozzle 20. In Fig. 4 the jet-blaster device 2 is used for drying a surface 32 of an asphalt pavement surface - for instance prior to applying a preformed marking item to the asphalt pavement surface 32 - as shown in Fig. 5.

It should be mentioned that the jet-blaster device 2 shown in Figs. 1-5 very easily may be made self-propelled by adding a driving motor which for instance may be an electric driving motor being supplied with electric power from an generator driven by the combustion engine 14.

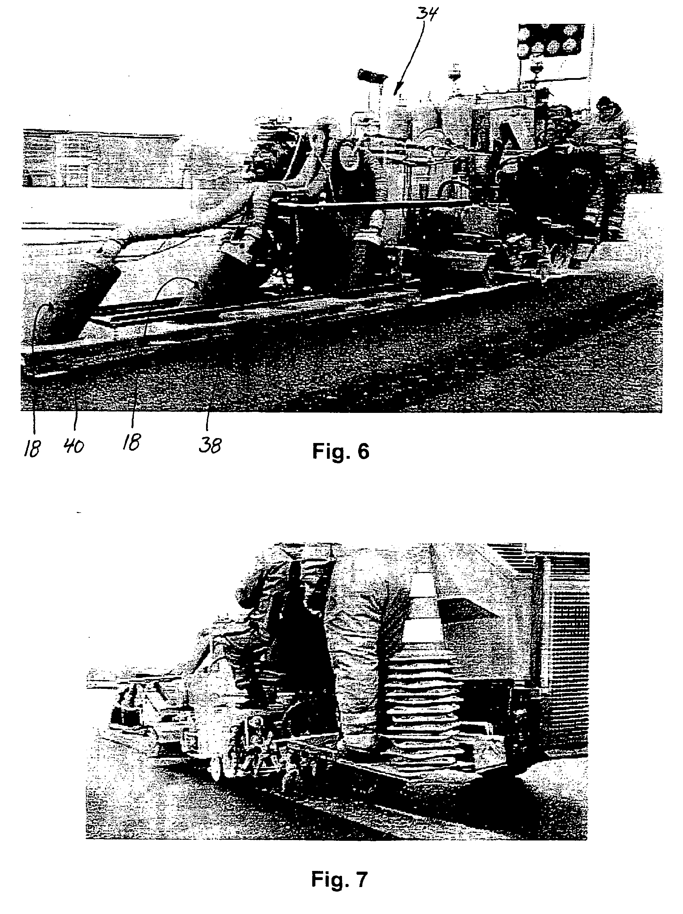

A larger self-propelled jet-blaster device 34 shown in Figs. 6 and 7 is provided with 3 jet-blaster guns 18 connected to a common heating box 38 positioned close to an asphalt pavement surface 40 - during the work when applying preformed marking items to the surface of the asphalt pavement surface 40.

Fig. 8 shows a cross sectional view of the jet-blaster gun 18 which at the top end is adapted to be connected with the flexible hose 19 from the fan 16. The jet-blaster gun 18 has a burner chamber 36 where a sparking plug 42 - as shown in the left hand side - is adapted to be screwed in and where the gas hose 24 from the supply gas bottle 12 is connected to a ball valve 44 - so that gas may be supplied to the burner chamber 36 through inlets 46 at both sides of the burner chamber 36. At the opposite end the jet-blaster gun 18 has an outlet nozzle 20 with an inclined cut end part 48. An outer mantle of the jet-blaster gun 18 is about the middle provided with a projecting support lever 50 by means of which the jet-blaster gun 18 may be mounted at the front end of the pushcart 4. The jet-blaster gun 18 may between the outer mantle and the inner tube be provided with high temperature insulation material (Kerlane) as the outlet temperature of the hot air stream from the outlet nozzle is about 1200° C. Alternatively said cavity between the outer mantle and the inner tube is empty and provided with open ends so that cooling air may circulate through said cavity.

As mentioned and stated above the jet-blaster device according to the invention may be used for quite different purposes where the general task is quickly to apply heat to materials. By way of example a modified jet-blaster device may be used in a mobile apparatus for cleansing or purifying contaminated material such as oil contaminated soil or sludge. The contaminated soil is excavated and preferably in-situ filled directly into the apparatus in which the contaminated soil is passing a treatment zone or chamber in which the contaminated soil is treated by means of a number of jet-blaster nozzles, so that the contaminations are burned or vaporized out from the soil. Afterwards the cleansed or purified soil is again returned to its normal position.

## Claims

1. A jet-blaster device (2) for use in the application of preformed road markings and pavement maintenance works such as crack filling and other industrial applications such as epoxy injections for concrete slabs, said jet-blaster device comprising a wheel supported frame system (4) provided with a supply gas bottle (12), a combustion engine (14) being drivingly connected with a fan (16), an outlet opening (17) of which being connected by means of a flexible hose (19) to a jet-blaster gun (18) comprising a gas heated burner system (36), having an outlet nozzle (20, 48), said wheel supported frame system preferably being provided as a pushcart with a cart-pole (6) at one end and the jet-blaster gun (18) at the opposite end, **characterised in that** said jet-blaster gun (18) is adapted to be mounted inclined and adjustable in such a manner that the outlet nozzle (20, 48) of the jet-blaster gun (18) may be directed against surface paths at both sides and at the front end of the wheel supported frame system.

2. A jet-blaster device (2) according to claim 1 by which the outlet (20) from the jet-blaster gun (18) is provided with a transverse directed mouthpiece (30) which by way of example has a width of same magnitude as that of the pushcart.

3. A jet-blaster device (2) according to claim 2 by which said mouthpiece furthermore may be adapted to be rotated in relation to the outlet nozzle (20) of the jet-blaster gun (18) so that the active working path of the jet-blaster device (2) may easily be adjusted in accordance with the width of the preformed marking item in question.

4. A jet-blaster device according to claim 1 and provided as a self-propelled unit comprising an electric drive motor being supplied with electric power from a generator, which either is driven by the combustion engine, or is a part of this.

5. A jet-blaster device (34) according to claim 1 and provided as a self-propelled unit by which said combustion engine is drivingly connected to the driving wheels and a number of fans for a corresponding number of jet-blaster guns (18), the outlet nozzles of which ending in a common oblong heating box (38) positioned close to the pavement surface (40).

## Patentansprüche

1. Druckstrahlanordnung (2) zur Verwendung beim Aufbringen von vorgeformten Straßenmarkierungen und bei Fahrbahnwartungsarbeiten, wie z.B. beim Füllen von Rissen und anderen industriellen Anwendungen, wie z.B. Epoxidharz-Einspritzungen für Betonplatten, wobei die Druckstrahlanordnung ein radgestütztes Rahmensystem (4) aufweist, auf dem eine Zufuhr-Gasflasche (12) angeordnet ist, einen antriebsmäßig mit einem Gebläse (16) verbundenen Verbrennungsmotor (14), und eine Auslassöffnung (17), die über einen flexiblen Schlauch (19) mit einer Druckstrahlkanone (18) verbunden ist, die ein mit Gas beheiztes Brennersystem (36) mit einer Auslassdüse (20, 48) umfasst, wobei das radgestützte Rahmensystem vorzugsweise als Schubwagen ausgebildet ist, die an einem Ende eine Lenkstange (6) und am gegenüberliegenden Ende die Druckstrahlkanone (18) aufweist, **dadurch gekennzeichnet, dass** die Druckstrahlkanone (18) so ausgebildet ist, dass sie schräg befestigt werden und derart eingestellt werden kann, dass die Auslassdüse (20, 48) der Druckstrahlkanone (18) gegen die Oberflächenbahnen an beiden Seiten und am vorderen Ende des radgestützten Rahmensystems gerichtet werden kann.

2. Druckstrahlanordnung (2) nach Anspruch 1, bei der der Auslass (20) der Druckstrahlkanone (18) ein quer gerichtetes Mundstück (39) aufweist, dessen Breite z.B. derjenigen der Schubkarre entspricht.

3. Druckstrahlanordnung (2) nach Anspruch 2, bei der das Mundstück weiterhin so ausgebildet sein kann, dass es in Bezug zur Auslassdüse (20) der Druckstrahlkanone (18) gedreht werden kann, so dass der aktive Arbeitsweg der Dnackstrahlanordnung (2) leicht der Breite der betreffenden vorgeformten Markierungseinheiten angepasst werden kann.

4. Druckstrahlanordnung (2) nach Anspruch 1, die als selbstfahrende Einheit mit einem elektrischen Antriebsmotor ausgebildet ist, der über einen Generator mit elektrischem Strom versorgt wird, wobei der Generator entweder durch den Verbrennungsmotor angetrieben wird oder Teil des Motors ist.

5. Druckstrahlanordnung (34) nach Anspruch 1, welche als selbstfahrende Einheit ausgebildet ist, durch die der Verbrennungsmotor antriebsmäßig mit den Antriebsrädern und einer Anzahl von Gebläsen für eine entsprechende Anzahl von Gebläsekanonen (18) verbunden ist, und wobei deren Auslassdüsen in einem gemeinsamen langgestreckten Heizkasten (38) enden, der nahe der Fahrbahnoberfläche (40) angeordnet ist.

## Revendications

1. Dispositif (2) de projection à jets, destiné à être utilisé dans l'application de marquages de route préformés et de travaux de maintenance de chaussée comme le remplissage de fissures et d'autres applications industrielles comme les injections d'époxy pour des dalles en béton, ledit dispositif de projection à jets comprenant un système de châssis (4) monté sur roues muni d'une bouteille (12) d'alimentation en gaz, un moteur à combustion (14) étant relié en entraînement à un ventilateur (16), dont une ouverture de sortie (17) est reliée au moyen d'un tuyau souple (19) à un pistolet (18) de projection à jets comprenant un système (36) de brûleur à gaz, ayant une buse de sortie (20, 48), ledit système de châssis monté sur roues étant réalisé de préférence sous la forme d'un chariot avec une perche de chariot (6) à une extrémité et le pistolet (18) de projection à jets à l'extrémité opposée, **caractérisé en ce que** ledit pistolet (18) de projection à jets est adapté pour être monté incliné et ajustable de telle manière que la buse de sortie (20, 48) du pistolet (18) de projection à jets peut être dirigée contre des trajectoires de surface des deux côtés et au niveau de l'extrémité frontale du système de chariot monté sur roues.

2. Dispositif (2) de projection à jets selon la revendication 1, dans lequel la sortie (20) du pistolet (18) de projection à jets est munie d'un embout (30) orienté transversalement qui, à titre d'exemple, a une largeur du même ordre de grandeur que celle du chariot.

3. Dispositif (2) de projection à jets selon la revendication 1, dans lequel ledit embout peut de plus être adapté pour tourner par rapport à la buse de sortie (20) du pistolet (18) de projection à jets, de sorte que la trajectoire de travail active du dispositif (2) de projection à jets peut être ajustée facilement en fonction de la largeur de l'élément de marquage préformé en question.

4. Dispositif de projection à jets selon la revendication 1 et muni d'une unité automotrice comprenant un moteur d'entraînement électrique alimenté en puissance électrique depuis un générateur, qui est entraîné par le moteur à combustion ou fait partie de celui-ci.

5. Dispositif (34) de projection à jets selon la revendication 1 et muni d'une unité automotrice, dans lequel ledit moteur à combustion est relié en entraînement avec les roues motrices et plusieurs ventilateurs pour un nombre correspondant de pistolets (18) de projection à jets, dont les buses de sortie se terminent dans un boîtier chauffant oblong commun (38) placé près de la surface (40) de la chaussée.
